# EUROPEAN PATENT APPLICATION

(11) **EP 1 964 704 A1**
(43) Date of publication of application: **03.09.2008**
(21) Application number: 08075100.1
(22) Date of filing: 08.02.2008
(51) Int. Cl.: B60J 7/12, B60J 7/10

(54) **Covering of transport containers**

(30) Priority: 08.02.2007 NL 1033362
(71) Applicant: Verhoeven, Antonie Richard, 3137 VB Vlaardingen (NL)
(72) Inventor: Verhoeven, Antonie Richard, 3137 VB Vlaardingen (NL)
(74) Representative: Houben, Christiaan Hein Willem Frans

(57) **Abstract**

A rollable and unrollable flexible material cover (213) which, when rolled up, is to be laid by an operator on a transport container (2) which has an open top, for the covering of said open top.
The cover (213) is provided with one or more air channels (214) which can be filled with air, wherein the cover is rolled up when not in use and can be unrolled during use over the top of the container (2) by filling the one or more air channels with air, where the cover is unrolled as a result of the filling of the one or more air channels, and where the one or more air channels can be emptied without prior fastening of the unrolled cover to the container, during which emptying of the one or more air channels the cover remains unrolled, after which the person can secure the cover to the container using fastening means (14).

## Description

The invention relates to the covering of transport containers. In particular, the invention relates to the covering of transport containers having an open top with a rollable and unrollable flexible material cover. The cover according to the invention can have a substantially closed structure, such as for example a tarpaulin cover, but can also have a more open structure, such as for example a net.

Open-top transport containers are usually used for the transporting of loose loads such as, for example, rubbish, waste, gravel or sand. The container is in this case loaded onto a lorry or a trailer. If the load is blown out of the container or falls from the container during transportation on the lorry or the trailer, this can lead to very dangerous situations.

For those reasons, it is desirable and in many cases also a legal requirement to cover the load in an open container with a suitable cover, for example a tarpaulin cover or a net.

In a conventional covering system for containers, the driver or another person manually attaches a tarpaulin or the like, which at the edges thereof is provided with tightening ropes, elastic tightening ties or the like, over the open top of the container. Because the containers which are used can in many cases be relatively tall - a container can in practice have a height varying between 0.5 and 3 metres - the driver has to climb onto the container in order to attach the tarpaulin cover over the open top of the container and to lay the tarpaulin cover over the edges of the container and to secure it using ropes or elastic ties intended for this purpose. The fact that the driver climbs onto the container gives rise to dangerous working conditions.

Known in the art are alternative covering systems for open containers in which a tarpaulin cover can be attached over the container in a manner which is safer for the driver.

NL 1027858 discloses an automatic covering system in which an edge of a tarpaulin cover is fastened to one side of the container. The opposite edge is fastened to a swivellable U-shaped frame which is operated pneumatically. Activation of the pneumatic cylinder causes swivelling of the U-shaped frame with entrainment of the tarpaulin cover which is thus attached over the open top.

In US 7025401 the tarpaulin cover is fastened on one side to a roller which is fastened to the container and rolled up thereon. On the other side, the tarpaulin cover is fastened to a swivellable U-shaped frame. By swivelling the U-shaped frame, the tarpaulin cover is attached over the container.

US 5102182 discloses a tarpaulin cover on a plurality of fastening brackets which are attached on either side of the loading vessel to cables which are able to move back and forth in the longitudinal direction thereof through revolving wheels. When open, the tarpaulin cover is folded between the brackets like a concertina. Moving the cables tightens the tarpaulin cover over the fastening brackets and covers the loading vessel.

US 2807499 discloses a vehicle comprising a loading vessel, the loading vessel being provided with a permanently attached covering system. The covering system comprises a tarpaulin cover which on one side is secured to the loading vessel. The tarpaulin cover slides and rests on the upper edges of the loading vessel walls and on a framework on the top of the loading vessel. Horizontal rails, over which slippers slide, are attached to the outside of the loading vessel walls. A tension spring is provided between each slipper and the edge of the tarpaulin cover. Air hoses, which can be filled with air in order to cause the tarpaulin cover to slide over the loading vessel out of its state in which it is folded up in the manner of a concertina, are provided on the tarpaulin cover in the longitudinal direction. Stretchable elastic strips which are present on the tarpaulin cover are used automatically to fold the tarpaulin cover back up as soon as the air has been expelled from the air hoses.

US 3499680 discloses a loading vessel comprising a permanently attached covering system. The covering system comprises a tarpaulin cover which is provided with self-coiling springs which are attached in the longitudinal direction. These self-coiling springs are secured at one end to the loading vessel and connected at their other end to a winding shaft extending transversely to the tarpaulin cover. When not in operation, the tarpaulin cover is rolled up around the winding shaft and is then located on the side where the self-coiling springs are secured to the loading vessel. Figure 7 of US 3499680 shows that the tarpaulin cover is further provided with air hoses extending in the longitudinal direction. During the filling of said hoses with air, the tarpaulin cover unrolls over the loading vessel, since the force of the air hoses overcomes the self-coiling springs. Before the air hoses are emptied, the tarpaulin cover is secured to the loading vessel, at least on the side of the winding shaft, to prevent the tarpaulin cover from rolling back up.

The covering systems mentioned hereinbefore are all permanently attached to the container or loading vessel itself. This has the drawback that each container must be provided with a covering system of this type, and this is expensive. In addition, these covering systems can become damaged during the loading of the container by means of, for example, shovels, cranes or forklift trucks. Furthermore, the weight of the container is increased by the covering system which is attached thereto, as a result of which less load can be transported owing to restrictions with regard to the permitted weight to be transported in each container.

Some of these drawbacks are overcome by a covering system which is disclosed in WO 98/05527. This known covering system comprises a tarpaulin cover which is stored on a roller. The roller is attached to a hook arm which is attached to the lorry and is suitable for the pulling onto the lorry of the container. The tarpaulin cover is provided at its free end with a crossbar having thereon a pull-rope. The pull-rope is of a length such that an operator can grip the pull-rope and can run it along the container in order thus to unwind the tarpaulin cover and tighten it over the container. GB 2349622 discloses a comparable system in which the roller is attached to the lorry in a height-adjustable manner.

The invention seeks to provide an alternative covering system.

According to the invention, this object is achieved by a rollable and unrollable cover according to claim 1 which, when rolled up, can be laid by an operator, for example the driver of the vehicle, on the transport container.

The rollable and unrollable flexible material cover is configured for the covering of the top of the container. The cover is provided with one or more air channels which can be filled with air via at least one connection which is connected to the one or more air channels. When not in use, the cover is rolled up and is then not located on the transport container but rather is, for example, stored in a storage vessel, intended for this purpose, of the vehicle used to transport the container. During use, the operator lays the rolled-up cover on the container, which is at this stage preferably still on the ground, and the cover is subsequently unrolled over the top of the container by filling the one or more air channels thereof with air. The unrolling of the cover using air is beneficial because the driver or another person no longer has to climb onto the container in order to position the cover over the container as in the case of the nets which are currently used for the most part. This reduces potentially dangerous situations and the risk of injuries.

Another advantage of the cover according to the invention is that it does not require any adaptation to existing containers.

A vehicle which is suitable for use in combination with the cover according to the invention has, in one practical embodiment, a device for the placing of the container on the vehicle, although this is not necessary. This may be a device comprising a swivellable hook arm, although it is also possible to provide a system with a cable or chain in order to pull the container onto the vehicle. A platform on which a person can stand in order to lay the cover, when rolled up, on the edge of the container and to connect the air channels to the compressed air connection is preferably attached, prior to the placing of the container on the vehicle (in one practical embodiment the back of the vehicle), to the side of the vehicle that faces the container. The platform provides a safe place where the person who starts to attach the cover over the open container can stand.

A compressed air connection is preferably attached to the vehicle. The compressed air connection is preferably connected to a compressed air source which is present on the vehicle, for example of the braking system. The compressed air connection is configured to be connected to the air channels of the cover in order to inflate the air channels and to unroll the cover. The driver can place the vehicle close to the container and subsequently climb onto the vehicle in order to lay the cover to be unwound on the edge of the container. Subsequently, the compressed air for the filling of the air channels is within reach (by hand). It is also possible for not the vehicle but rather external equipment - for example in the form of a rolling tower or another type of displaceable platform - to be used in order safely to climb up to the desired height in order to lay the cover to be unrolled on the edge of the container. An embodiment of this type utilizes an external air source to fill the air channels of the cover with compressed air.

In one possible embodiment, the cover is made of a substantially dense material. In another, possibly lighter and accordingly advantageous embodiment, the cover is made of a material having an open structure such as, for example, a net.

In one possible embodiment, one or more air hoses, which form the air channels, are fastened to the cover, and this is particularly advantageous if the cover is a net.

In one possible embodiment of the cover, one or more strips of substantially dense material are stitched, welded, bonded or otherwise connected in a substantially air-tight manner to the material, which one or more strips form an air channel together with the cover material located therebelow.

Preferably, the cover is provided with a plurality of air channels next to one another and wherein at least some of said air channels are joined together by at least one connecting channel which preferably extends in the width direction of the cover.

The connecting channel can be formed by a strip of substantially dense material which, on the cover, is stitched, welded, bonded or otherwise connected thereto in a substantially air-tight manner.

In one possible embodiment, the cover is formed from two layers which are attached next to each other and between which, between two sealing strips where the two layers are joined together, the one or more air channels and the connecting channels which may be present are formed.

Preferably, the cover is provided, in proximity to the edge thereof, with a number of fastening eyelets or the like in order to secure the rolled-out cover to the container using tightening means such as tightening ropes, elastic tightening ties or the like.

The invention further relates to a combination of a container and cover as described in claim 2, to a method according to claim 3 and to a vehicle according to claim 10.

The invention will be described hereinafter in greater detail with reference to the drawings, in which:
Fig. 1 is a perspective view of a container covered by a tarpaulin cover and a vehicle for the transporting of the container;
Fig. 2 is a schematic representation of a preferred embodiment of a tarpaulin cover according to the invention;
Fig. 3 is a schematic representation of another preferred embodiment of a tarpaulin cover according to the invention;
Fig. 4 is a schematic representation of still another preferred embodiment of a tarpaulin cover according to the invention;
Fig. 5 is a schematic representation of still another preferred embodiment of a tarpaulin cover according to the invention;
Fig. 6 is a side view of a part of a vehicle for the transporting of containers; and
Fig. 7 is a plan view of the vehicle part from Fig. 6.

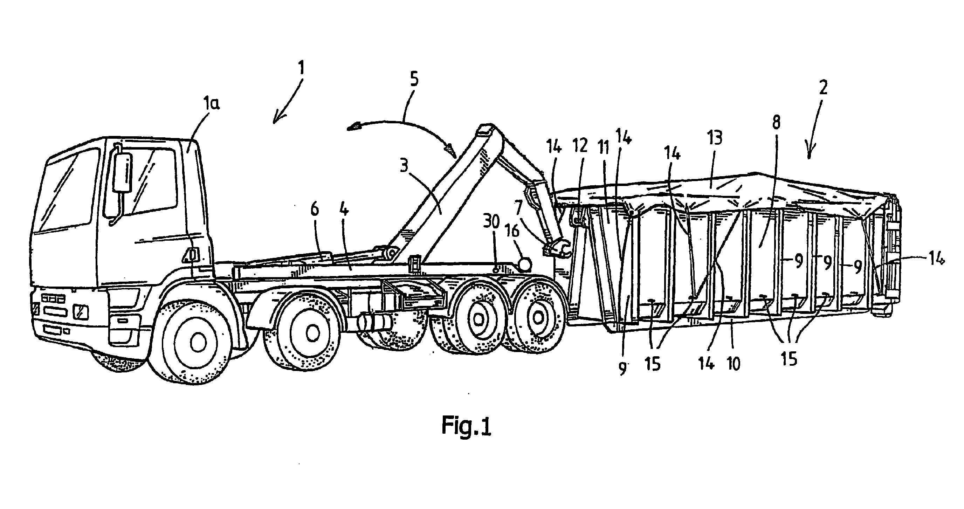

Fig. 1 shows a vehicle 1, in this case by way of example a lorry, which is configured for the transporting of containers of the type having an open top. A container of this type is shown in the figure and is denoted by reference numeral 2.

The container 2 shown is made of metal, preferably steel, and comprises a vessel 8 having a substantially rectangular horizontal cross section. Substantially U-shaped stiffening ribs 9 are attached to the outside of the vessel 8. Slide girders 10 extending in the longitudinal direction are attached to the bottom of the vessel 8. The container has a front wall 11 to the centre of which, viewed in the transverse direction, a hook member 12 is attached. It will be noted that within the context of the invention the container can also be embodied differently from the manner specifically represented in the present document. All that matters is that it is an open-top container vessel.

The top of the container 2 is covered by a tarpaulin cover 13 which is secured to the container 2 using ropes or elastic ties 14 which are attached to the tarpaulin cover, in particular to eyelets 15 or the like intended for this purpose on the outside of the container 2.

The lorry 1 has a hook arm 3 which is mounted so as to be able to swivel with respect to the chassis 4 of the lorry 1, as is indicated by the double-headed arrow 5. The swivelling movement of the hook arm 3 is driven by one or more hydraulic cylinders, in the illustrated case one cylinder 6. A hook 7 is attached to the end of the hook arm 3. This hook 7 acts on the hook member 12 during the loading of the container 2 onto the lorry 1, after which the hook arm 3 is swivelled in the direction of the cab 1a of the lorry 1. As a result, first the front 11 of the container 2 is raised upward and subsequently the container 2 is pulled forward on the lorry 1, the slide girders 10 running on bearing rollers 16 which are located at the back of the lorry 1.

The container 2 shown is of the type which is in practice often used for the transporting of rubbish or waste, although other things can also be transported therein. Containers 2 of this type often have a height of from 0.5 to 3 metres, in the illustrated case for example approximately 2.6 metres, but can also have a different height.

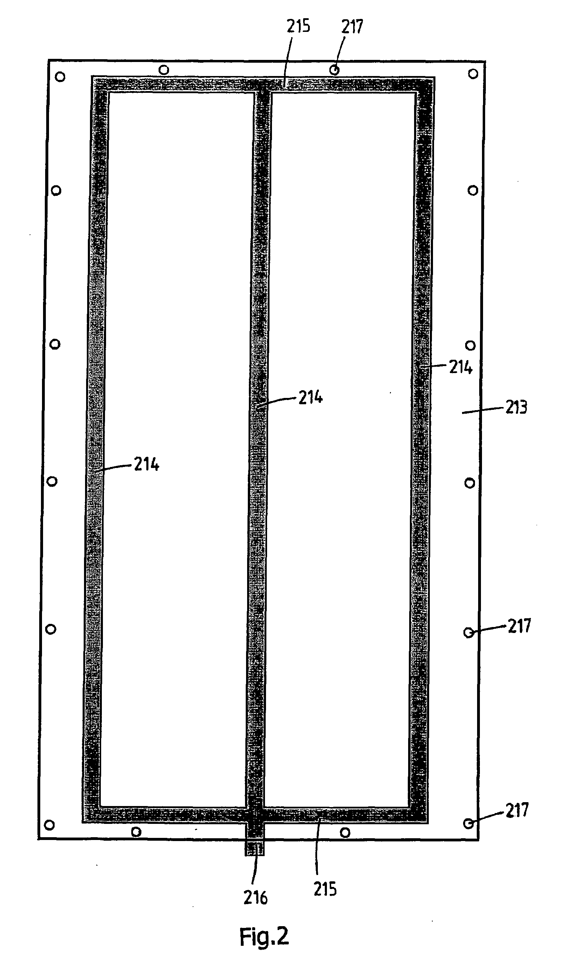

Fig. 2 shows a preferred embodiment of a tarpaulin cover 213 according to the invention in a folded-out state. The tarpaulin cover 213 is rectangular and can, depending on the dimensions of the container 2, have a length of from 4 to 9 metres, in the example shown a length of from 7 to 8 metres, and a width of from 3 to 4 metres, so the tarpaulin cover 213 fits over the open top of the container 2 even if rubbish protrudes somewhat above the edge of the container. Obviously, other dimensions are also possible.

The tarpaulin cover 213 comprises preferably polyvinyl chloride (PVC) or polyethylene (PE) or another suitable plastic. Preferably, the tarpaulin cover is made of a fabric which is dipped in PVC or another plastics material.

A set of air channels, comprising in this case three air channels 214 which extend in the longitudinal direction and are joined together at their ends by connecting channels 215 extending in the transverse direction, is attached to the tarpaulin cover 213. A common connection 216, to which a compressed air connection can be connected in order to fill the air channels with air, is attached in one of the connecting channels 215. Fastening eyelets 217, with which the tarpaulin cover 213 can be secured to the container by means of ropes or elastic ties, such as is shown in Fig. 1, are formed along the edges of the tarpaulin cover 213.

The air channels 214 and connecting channels 215 can be formed by stitching, bonding or otherwise connecting in a substantially air-tight manner one or more strips of a substantially air-tight material to the tarpaulin cover. The aforementioned strips form together with the tarpaulin material located therebelow a set of air channels 214 and connecting channels 215. Preferably, the strips are made of the same material as the tarpaulin cover 213.

Alternatively, the tarpaulin cover 213 can be formed from two layers which are attached next to each other, made for example of plastic incorporating a fabric. These layers can be joined together in a specific set, for example by stitching a set or heat-welding together, thus forming air channels 214 and connecting channels 215 between the connecting lines thus formed and between the two layers.

A further alternative is to fasten to the tarpaulin cover 213 one or more air hoses which form the air channels 214 and connecting channels 215.

During use, the tarpaulin cover 213 is rolled up on the vehicle 1, i.e. stored in the lorry or the trailer, for example in a storage vessel which is intended for this purpose and was in most cases already present for the storing of conventional tarpaulin covers.

When a container has to be transported, the back of the vehicle 1 is driven up close to the container which has not yet been covered. Usually, the vehicle 1 is configured with a reversing camera which assists the positioning thereof with respect to the container 2. Once the vehicle 1 has been properly positioned, the driver can fetch the tarpaulin cover 213 from the storage vessel and climb onto the back of the vehicle 1 in order subsequently to lay the rolled-up tarpaulin 213 on the upper edge of the front wall 11 of the container 2. Usually, the container 2 will be full, so the rolled-up tarpaulin 213 is also still supported by the rubbish or the like which is present in the container. Subsequently, the driver connects the connection 216 to a compressed air source (not shown) in order to fill the air channels 216 with air. The air channels 216 which extend in the longitudinal direction seek to extend through said compressed air source, as a result of which the tarpaulin cover 213 is rolled out over the container 2. Once the tarpaulin cover 213 has been rolled out, the driver can still move the tarpaulin cover 213 somewhat from its position on the back of the lorry 1 as a result of the rigidity which is provided by the inflated air channels 214 and connecting channels 215.

The compressed air for the inflating is preferably derived from the compressed air system which is present on a lorry as standard. An additional connection 30 which has a hose (not shown) coupled thereto and is within reach once the driver has laid the tarpaulin cover 213 on the edge of the container 2 is attached on the back of the lorry 1 (or the trailer). A foot-operable operating pedal (not shown), with which the compressed air connection 30 can be opened, is preferably attached. In practice, the compressed air system of a lorry can supply a pressure of 8 bar. Such a high pressure is in principle not necessary in order to unroll the tarpaulin cover 213. As a result, a pressure reducing valve (not shown) is preferably attached between the compressed air source and the compressed air connection 30 for the tarpaulin cover 213.

In principle, it is also possible to obtain compressed air from an external source which is not attached to the vehicle. This might, for example, be the case in a trailer, but also in a rolling tower or another type of displaceable platform.

Once the tarpaulin cover 213 has been properly positioned on the container 2, the compressed air connection 30 can then be uncoupled from the connection 216 of the tarpaulin cover 213. As a result, the air channels 214 will be evacuated and the tarpaulin cover 213 will behave like a conventional tarpaulin cover 213 which is subsequently secured to the container 2 by the driver using elastic ties or tightening ropes 14.

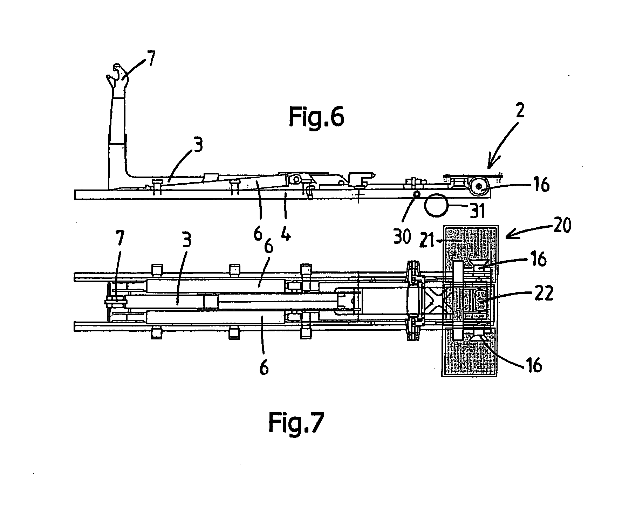

In principle, the pressure of the compressed air which is supplied to the air channels 214 is high enough to inflate and to keep inflated the air channels 214 even if one of the channels 214, 215 has a leak. Damage to the tarpaulin cover 213 and, in particular, to the channels 214, 215 caused by rubbish or the like accordingly does not present any problems to the functioning of the unrolling mechanism provided by the invention. For those reasons, the material of the tarpaulin cover 213, in particular of the channels, does not have to be completely air-tight provided that the material is sufficiently resistant to the flowing therethrough of air in order to keep the channels inflated with a continuous supply of compressed air. Fig. 6 and Fig. 7 show a back part of the lorry on which the container 2 is placed in order to be transported. A hook arm 6 which can be swivelled using two hydraulic cylinders 6 is shown. The running wheels 16 are shown at the end of the lorry. A platform 20 is also attached to the trailing end. This platform 20 consists of two side plates 21 and a centre plate 22. The side plates 21 are secured to the container system chassis 4 or fastened to the underlying vehicle chassis and are in most cases immovable. The centre plate 22 is fastened to the back part of the hook arm 3 and can swivel in conjunction therewith. The plates 21, 22 of the platform 20 are preferably made of steel anti-slip plates or are provided with an anti-slip layer. The platform 20 provides the driver with a safe place where he can stand in order to attach the tarpaulin cover 213 over the container 2, wherein there is no risk of stumbling or slipping. The hose for the compressed air and also the operating pedal for the opening of the compressed air connection can be placed at the location of the platform.

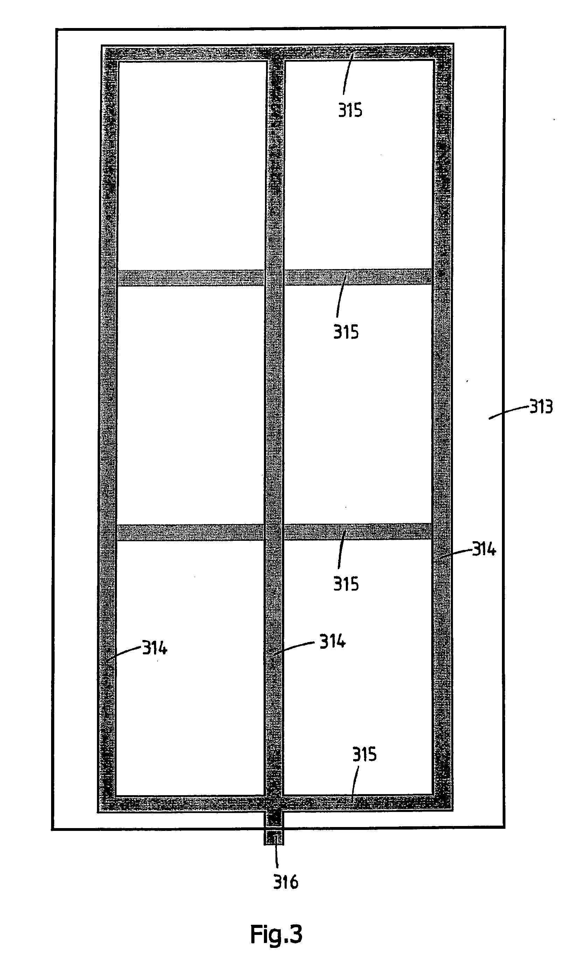

Fig. 3 shows a tarpaulin cover 313, the tarpaulin cover 313 having four connecting channels 315 between the air channels 314. The common filling connection for the air channels 314 and connecting channels 315 is denoted by reference numeral 316.

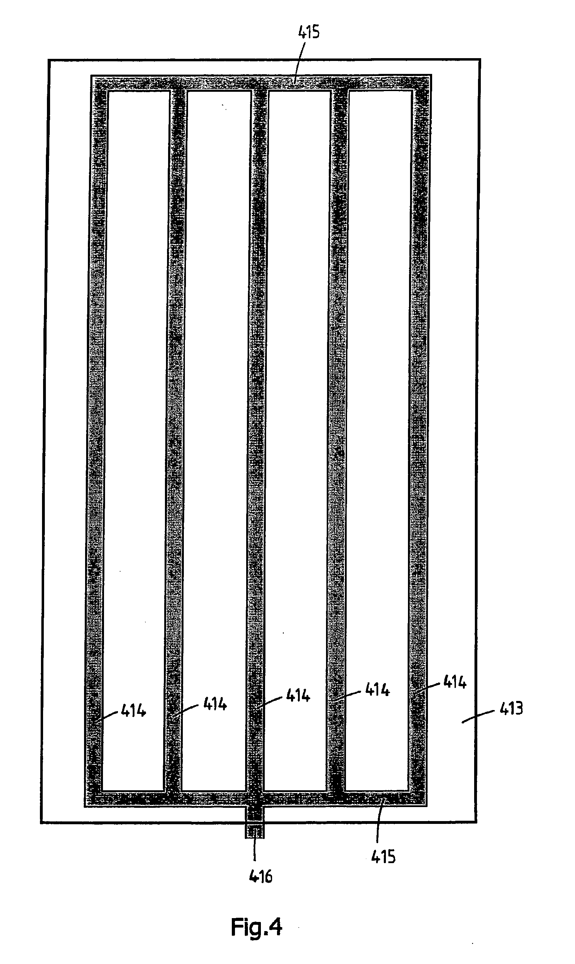

Fig. 4 shows still another tarpaulin cover 413 comprising four parallel air channels 414 which are connected at the ends thereof by connecting channels 415. The common filling connection is denoted by reference numeral 416.

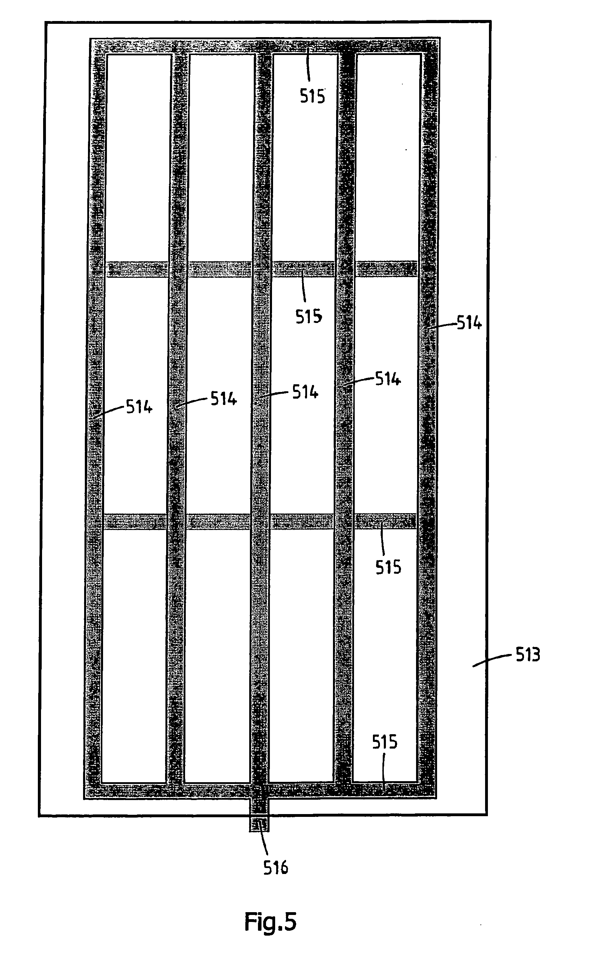

Fig. 5 shows still a further alternative. The tarpaulin cover 513 has five air channels 514 and four connecting channels 515. The filling connection is denoted by reference numeral 516.

It will be noted that the sets of air channels and connecting channels shown in Fig. 2 - 5 in/on the tarpaulin must in no way be regarded as entailing limitation. Other sets of air channels and connecting channels which fall within the scope of the invention are also possible. Preferably, at least one or more of the air channels extend in the longitudinal direction.

There may also be provided a plurality of groups of air channels each comprising one or more air channels, wherein the supply of air to each group of air channels can be separately regulated by the operator, for example as a result of the fact that each group has its own air connection and the operator can regulate, for example using suitable valves, the supply to each group. For example, there may be provided one group of air channels extending in the longitudinal direction and one group of air channels extending in the transverse direction.

It will also be noted that instead of a cover which is substantially dense, like the tarpaulin cover described with reference to Fig. 2 - 5, a cover having a more open structure also falls within the scope of the invention. Examples include a cloth having a more open structure or a net, for example a steel net, a rubber net or a carbonate net. In that case, air channels, for example in the form of air hoses, will be attached to the net.

## Claims

1. Rollable and unrollable flexible material cover which, when rolled up, is to be laid by an operator, for example a driver, on a transport container which can be transported using a vehicle and has an open top, which cover is used for the covering of said open top, **characterized in that** the cover is provided with one or more air channels, which air channels can be filled with air via at least one connection which is connected to the one or more air channels, wherein the cover is rolled up when not in use and can be unrolled during use over the top of the container by filling the one or more air channels with air, the cover being configured in such a way that - when the cover is unrolled over the open top of the transport container as a result of the filling of the one or more air channels - the one or more air channels can be emptied without prior fastening of the unrolled cover to the container, during which emptying of the one or more air channels the cover remains unrolled, after which the operator can secure the cover to the container using fastening means.

2. Combination of a transport container which can be placed or is placed on a vehicle and has an open top and a separate rollable and unrollable flexible material cover which, when rolled up, can be laid by a person, for example a driver, on the transport container, which cover is used for the covering of said open top, **characterized in that** the cover is provided with one or more air channels, which air channels can be filled with air via at least one connection which is connected to the one or more air channels, wherein the cover is rolled up when not in use and can be unrolled during use over the top of the container by filling the one or more air channels with air, the cover being configured in such a way that - when the cover is unrolled over the open top of the transport container as a result of the filling of the one or more air channels - the one or more air channels can be emptied without prior fastening of the unrolled cover to the container, during which emptying of the one or more air channels the cover remains unrolled, after which the cover can be secured to the container by the operator with the aid of fastening means.

3. Method for the covering of a transport container which can be placed on a vehicle and has an open top, use being made of a rollable and unrollable cover according to claim 1 and/or a combination according to claim 2, wherein:
- the cover is laid, when rolled up, on the edge of the container by an operator, for example a driver,
- the one or more air channels are connected to a compressed air source, preferably a compressed air source which is present on the vehicle,
- the cover is unrolled over the open top by filling the one or more air channels of the cover with air,
- the unrolled cover comprising the air-filled air channels is manoeuvred into the correct position over the open top of the container,
- the air channels are emptied, and
- the cover is secured to the container by the operator using fastening means, for example with ropes, elastic ties or the like.

4. Method according to claim 3, wherein a vehicle on which the container has to be placed is positioned with the back of the vehicle in proximity to the container, an operator positions himself at a location intended for this purpose on the back of the vehicle and the operator lay the cover on the container.

5. Method according to either claim 3 or claim 4, wherein the operator connects the air channels of the cover to a compressed air source which is present on the vehicle.

6. Method according to either claim 3 or claim 4, wherein the operator connects the air channels of the cover to a separate compressed air source, for example a compressed air flask or a compressor.

7. Method according to claim 3, and preferably also according to claim 6, wherein use is made of a rolling tower, in particular at a location where a plurality of containers are arranged, onto which the operator climbs in order to lay the rolled-up cover on the container.

8. Method according to claim 3, wherein use is made of a vehicle according to claim 10.

9. Cover according to claim 1, wherein the cover is provided with a plurality of air channels next to one another and wherein at least some of said air channels are joined together by at least one connecting channel which preferably extends in the width direction of the cover.

10. Vehicle for the transporting of a transport container which can be placed on the vehicle and has an open top, the vehicle being equipped with a rollable and unrollable cover according to claim 1, preferably stored in a storage vessel - intended for this purpose - of the vehicle **characterized in that** there is attached to the back of the vehicle a platform on which a person can stand in order to lay the cover, when rolled up, on the edge of the container and to connect the air channels to a compressed air connection, which compressed air connection is preferably connected to a compressed air source which is present on the vehicle, a pressure reducing valve preferably being attached between the compressed air source and the compressed air connection, and a foot-operable operating member preferably being attached to the platform in order to open the compressed air connection.
